# EUROPÄISCHE PATENTSCHRIFT

(11) **EP 1 863 612 B1**
(45) Veröffentlichungstag und Bekanntmachung des Hinweises auf die Patenterteilung: **17.11.2010**
(21) Anmeldenummer: 06706023.6
(22) Anmeldetag: 07.03.2006
(51) Int. Cl.: B23K 26/03

(54) **VERFAHREN ZUR VERMESSUNG VON PHASENGRENZEN EINES WERKSTOFFES BEI DER BEARBEITUNG MIT EINEM BEARBEITUNGSSTRAHL MIT EINER ZUSÄTZLICHEN BELEUCHTUNGSSTRAHLUNG UND EINEM AUTOMATISIERTEN BILDVERARBEITUNGSALGORITHMUS SOWIE ZUGEHÖRIGE VORRICHTUNG**
METHOD FOR MEASURING PHASE BOUNDARIES OF A MATERIAL DURING MACHINING WITH A MACHINING BEAM USING ADDITIONAL ILLUMINATION RADIATION AND AN AUTOMATED IMAGE PROCESSING ALGORITHM, AND ASSOCIATED DEVICE
PROCEDE POUR MESURER DES LIMITES DE PHASE D'UN MATERIAU LORS DE L'USINAGE AVEC UN FAISCEAU D'USINAGE AU MOYEN D'UN RAYONNEMENT D'ECLAIRAGE SUPPLEMENTAIRE ET D'UN ALGORITHME DE TRAITEMENT D'IMAGES AUTOMATISE ET DISPOSITIF ASSOCIE

(30) Priorität: 07.03.2005 DE 102005010381
(43) Veröffentlichungstag der Anmeldung: 12.12.2007
(73) Patentinhaber: Fraunhofer-Gesellschaft zur Förderung der angewandten Forschung e.V., 80686 München (DE)
(72) Erfinder: REGAARD, Boris, 52064 Aachen (DE); MOALEM, Anas, 30419 Hannover (DE); MICHEL, Jan, 40670 Meerbusch (DE); ABELS, Peter, 52477 Alsdorf (DE); KAIERLE, Stefan, 52134 Herzogenrath (DE); SCHULZ, Wolfgang, 52379 Langerwehe (DE)
(74) Vertreter: Gagel, Roland
(86) Internationale Anmeldenummer: PCT/DE2006/000400
(87) Internationale Veröffentlichungsnummer: WO 2006/094488

(56) Entgegenhaltungen:
- DE-A1- 4 106 008
- DE-A1- 19 716 293
- DE-A1- 19 852 302
- US-B1- 6 757 055
- PATENT ABSTRACTS OF JAPAN Bd. 2000, Nr. 12, 3. Januar 2001 (2001-01-03) -& JP 2000 263266 A (NKK CORP), 26. September 2000 (2000-09-26)

## Beschreibung

Die vorliegende Erfindung betrifft ein Verfahren zur Vermessung von Phasengrenzen eines Werkstoffes bei der Bearbeitung eines Werkstücks mit einem Bearbeitungsstrahl, insbesondere mit einem Laserstrahl, sowie eine Vorrichtung für die Bearbeitung eines Werkstücks, der zur Durchführung des vorliegenden Verfahrens ausgebildet ist (siehe Ansprüche 1 und 9).

Zur Erzielung eines zufrieden stellenden Bearbeitungsergebnisses ist die Überwachung des Bearbeitungsprozesses bei der Bearbeitung von Werkstoffen mit energetischer Strahlung sehr wichtig. Dies betrifft auch die Lasermaterialbearbeitung, ein bevorzugtes Anwendungsgebiet des vorliegenden Verfahrens, bei der ein Laserstrahl beispielsweise zum Schweißen, zum Schneiden oder zum Auftragen oder Generieren über die Oberfläche eines Werkstücks geführt wird. Bei diesem Prozess schmilzt der Werkstoff im Bereich des Auftreffpunkts des Laserstrahls auf das Werkstück kurzzeitig auf, wobei in der Regel gleichzeitig Werkstoff von der festen oder flüssigen in die gasförmige Phase übergeht und damit abgetragen wird. Eine Beobachtung der Prozesse in dieser Bearbeitungszone während der Laserbearbeitung ist für die Überwachung des Bearbeitungsprozesses wünschenswert.

### Stand der Technik

Zur automatisierten Beurteilung von Bearbeitungsprozessen mit Hochenergiestrahlung ist es bekannt, die Sekundärstrahlung des Bearbeitungsprozesses koaxial oder lateral zur Bearbeitungsstrahlung mit geeigneten optischen Sensoren oder Detektoren zu beobachten. Hierbei handelt es sich in der Regel entweder um Plasma- bzw. Metalldampfstrahlung im Wellenlängenbereich zwischen 400nm und 650nm oder um Prozesswärmestrahlung im Wellenlängenbereich zwischen 900nm und 10µm. Die Analyse der Plasmastrahlung erlaubt Aussagen über die Keyhole-Geometrie, beispielsweise über die Einschweißtiefe bei Schweißprozessen, sowie über die Plasma- bzw. Metalldampfausbreitung. Die Analyse der Wärmestrahlung liefert Informationen über die relative Temperaturverteilung auf und über dem Werkstück.

So betrifft beispielsweise die DE 19716293 A1 eine Vorrichtung zur Regelung von Schweißparametern beim Laserstrahl-Schweißen, bei der eine Auswertung von CCD-Bildern des Schmelzbereiches auf der Grundlage der Sekundärstrahlung erfolgt.

Weiterhin sind Vorrichtungen zur Beobachtung von Laserstrahlschweißprozessen bekannt, welche die Bearbeitungszone lateral zum Bearbeitungsstrahl mit Strahlquellen hoher Leistungsdichte beleuchten und lateral zum Bearbeitungsstrahl mit einer Kamera beobachten. Auf diese Weise kann beispielsweise Spritzerbildung über der Bearbeitungszone visualisiert werden.

Die JP 2001-287064 beschreibt ein Verfahren zur Visualisierung des Bearbeitungsbereiches bei der Bearbeitung eines Werkstücks mit einem Bearbeitungsstrahl, bei dem die Bearbeitungszone zumindest annähernd koaxial zum Bearbeitungsstrahl mit optischer Strahlung beleuchtet und von der Bearbeitungszone reflektierte Strahlung mit einem optischen Detektor ortsaufgelöst erfasst wird. Das erhaltene Bild wird zur Überwachung des Bearbeitungsprozesses an einem Monitor in Echtzeit dargestellt.

Die JP 2000-263266 A beschreibt ein Verfahren, bei dem das zu verarbeitende Werkstück schräg zum Bearbeitungsstrahl beleuchtet wird, um mit einer Kamera den Verlauf der zu verschweißenden Fuge zu ermitteln. Gleichzeitig wird mit der Kamera die Position des Laserstrahls auf dem Werkstück über die Plasma-Emission detektiert.

Aus der DE 19852302 A1, die als nächsliegenden Stand der Technik für Ansprüche 1 und 9 angesehen wird, ist ein Verfahren zum Bearbeiten von Werkstücken mit Hochenergiestrahlung bekannt, bei dem durch zusätzliche Fremdbeleuchtung eine Lichtlinie in der Umgebung des Bearbeitungs-bereiches erzeugt wird, um während der Bearbeitung beispielsweise durch ein Lichtschnittverfahren optische Messungen am Werkstück durchzuführen. Hierbei wird auch auf die Möglichkeit einer Vermessung des an der Bearbeitungsstelle erzeugten Schmelzbades hingewiesen, ohne jedoch anzugeben, wie eine derartige Vermessung erfolgen soll.

Die Aufgabe der vorliegenden Erfindung besteht darin, ein Verfahren zur Vermessung von Phasengrenzen eines Werkstoffes bei der Bearbeitung eines Werkstücks mit einem Bearbeitungsstrahl sowie eine für die Durchführung des Verfahrens ausgebildete Vorrichtung anzugeben, mit denen sich der Verlauf der Phasengrenze flüssig/fest in der Bearbeitungszone bestimmen lässt.

### Darstellung der Erfindung

Die Aufgabe wird mit dem Verfahren sowie der Vorrichtung der Patentansprüche 1 und 9 gelöst. Vorteilhafte Ausgestaltungen des Verfahrens sowie der Vorrichtung sind Gegenstand der Unteransprüche oder lassen sich der nachfolgenden Beschreibung sowie den Ausführungsbeispielen entnehmen.

Bei dem vorliegenden Verfahren wird eine den Auftreffort des Bearbeitungsstrahls auf dem Werkstück umfassende Bearbeitungszone während der Bearbeitung zusätzlich zumindest annähernd koaxial zum Bearbeitungsstrahl mit optischer Strahlung beleuchtet. Von der Bearbeitungszone reflektierte optische Strahlung wird parallel oder unter einem kleinen Winkel zur Einfallsrichtung der optischen Strahlung bzw. des Bearbeitungsstrahls auf das Werkstück mit einem optischen Detektor ortsaufgelöst erfasst, um ein optisches Reflexionsmuster der Bearbeitungszone zu erhalten. Aus dem optischen Reflexionsmuster wird dann mit einem Bildverarbeitungsalgorithmus automatisiert der Verlauf ein oder mehrerer Phasengrenzen flüssig/fest in der Bearbeitungszone anhand eines Übergangs von einem Bereich mit einem großflächigen homogenen Gebiet in einen Bereich mit vielen kleinflächigen homogenen Gebieten im optischen Reflexionsmuster bestimmt.

Bei dem vorliegenden Verfahren wird ausgenutzt, dass die Werkstücke bei der Materialbearbeitung mit einem Bearbeitungsstrahl, insbesondere bei der Lasermaterialbearbeitung, in festem bzw. erstarrtem Zustand Oberflächenrauhigkeiten aufweisen, die bei zur Oberfläche senkrechter oder nur gering geneigter Beleuchtung ein unregelmäßiges Reflexionsmuster erzeugen. Die schmelzflüssige Phase hingegen weist eine wesentlich geringere Rauhigkeit auf, so dass sie ein im Vergleich zu den genannten Oberflächenrauhigkeiten großflächiges homogenes Reflexionsmuster erzeugt. Dieses Reflexionsmuster wird beim vorliegenden Verfahren mit einem optischen Detektor, vorzugsweise einer Kamera, ortsaufgelöst in zumindest annähernd senkrechter Rückreflexion, d.h. zumindest annähernd parallel zum Beleuchtungsstrahl oder Bearbeitungsstrahl, erfasst und ausgewertet. Der Verlauf der Phasengrenze flüssig/fest kann anhand des Übergangs großflächiger homogener Gebiete des Reflexionsmusters in Bereiche mit einer Vielzahl von demgegenüber kleinflächigen homogenen Gebieten bestimmt werden, die ein unregelmäßiges Reflexionsmuster ergeben. Auf diese Weise lässt sich durch die koaxial mit dem Bearbeitungsstrahl nahezu senkrechte Beleuchtung der Bearbeitungszone und die ortsaufgelöste Erfassung der von der Bearbeitungszone parallel zur Einfallsrichtung rückreflektierten optischen Strahlung der Verlauf der Phasengrenze zwischen der Schmelze und dem noch oder wieder festen Werkstoff während der gesamten Bearbeitung überwachen. Das Verfahren erfordert lediglich eine Oberflächenstruktur des Werkstücks mit einer geeigneten Rauhigkeit, um die Phasengrenze flüssig/fest in der dargestellten Weise in einem Reflexionsmuster erkennen zu können. Diese Werkstückrauhigkeit ist bei den meisten Anwendungen automatisch gegeben.

Mit dem vorliegenden Verfahren lässt sich somit während der Bearbeitung der Verlauf der Phasengrenze flüssig/fest des bearbeiteten Werkstoffes in der Bearbeitungszone vermessen. Die Bestimmung des Verlaufs der Phasengrenze kann dabei mit einem geeigneten Bildverarbeitungsalgorithmus automatisiert erfolgen. Das Verfahren ist vor allem für die Lasermaterialbearbeitung vorteilhaft einsetzbar, wobei alle Arten von Laserstrahlquellen, beispielsweise CO₂-Laser, Nd:YAG-Laser oder Diodenlaser, als Strahlquellen für den Bearbeitungsstrahl eingesetzt werden können. Das Verfahren ist für alle Bearbeitungsprozesse geeignet, bei denen das optische System zur Führung des Bearbeitungsstrahls eine Beleuchtung und Beobachtung der Bearbeitungszone parallel zum Bearbeitungsstrahl erlaubt. Ein Beispiel ist die Lasermaterialbearbeitung mit CO₂-Lasern, bei der die Bearbeitungszone beispielsweise durch eine Bohrung im Fokussierspiegel für die Laserstrahlung beleuchtet und beobachtet werden kann. Ein weiteres Beispiel ist die Lasermaterialbearbeitung mit Nd:YAG-Lasern, bei der die Beleuchtung und Beobachtung beispielsweise durch einen dichroitischen Spiegel in der Bearbeitungsoptik hindurch erfolgen kann.

In einer vorteilhaften Weiterbildung des vorliegenden Verfahrens werden aus dem optischen Reflexionsmuster weiterhin ein oder mehrere Bereiche der Schmelze des Werkstoffes bestimmt, in denen die Flächennormale auf die Oberfläche der Schmelze innerhalb vorgebbarer Grenzen annähernd parallel zum Bearbeitungsstrahl liegt. Aus dieser Bestimmung lassen sich Informationen über die dreidimensionale Oberflächenform der Schmelze ableiten. Die vorgebbaren Grenzen des Winkels der Flächennormalen zur Strahlachse des Bearbeitungsstrahls lassen sich über den Beleuchtungswinkel bzw. Beleuchtungswinkelbereich zu dieser Strahlachse einstellen. Der maximal mögliche Beobachtungswinkel ist dabei durch die Abbildungseigenschaften der Beleuchtungs- und Detektionsoptik vorgegeben. Bereiche der Schmelze, deren Flächennormale innerhalb dieser vorgebbaren Grenzen des Winkels zur Strahlachse des Bearbeitungsstrahls liegt, reflektieren großflächig und erscheinen im Reflexionsmuster hell, während Bereiche mit stärker zu dieser Strahlachse geneigter Flächennormalen nicht in das optische System, d.h. auf den Detektor, rückreflektieren. Diese Bereiche sind im Reflexionsmuster dunkel, so dass die jeweiligen Bereiche ohne weiteres aus dem Reflexionsmuster bestimmt werden können.

Die optische Strahlung zur Beleuchtung der Bearbeitungszone wird vorzugsweise so gewählt, dass die durch die Bearbeitung erzeugte Sekundärstrahlung gegenüber der reflektierten optischen Strahlung mit einem optischen Filter zumindest teilweise unterdrückt werden kann. Dieser optische Filter wird vor dem optischen Detektor angeordnet, so dass das Reflexionsmuster von der ebenfalls einfallenden Sekundärstrahlung nicht oder nur in einem geringen Maße beeinflusst wird. Auch die Intensität der optischen Strahlung zur Beleuchtung der Bearbeitungszone muss ausreichend groß gewählt werden, um die auf den Detektor treffende Sekundärstrahlung zu überstrahlen.

In einer weiteren vorteilhaften Ausgestaltung des Verfahrens wird der optische Filter so gewählt, dass auch ein ausreichender Anteil an Sekundärstrahlung vom optischen Detektor erfasst wird, ohne die Auswertung des Reflexionsmusters der reflektierten optischen Strahlung negativ zu beeinflussen. Aus der erfassten Sekundärstrahlung kann dann zusätzlich die Phasengrenze flüssig/gasförmig bestimmt werden, die sich vor allem durch unterschiedliche Temperaturen und somit eine unterschiedliche Helligkeit im langwelligen Strahlungsbereich erkennen lässt.

Beim vorliegenden Verfahren und der zugehörigen Vorrichtung erfolgt die Auswertung des Reflexionsmusters automatisiert durch ein geeignetes Bildverarbeitungsprogramm. Dieses Bildverarbeitungsprogramm muss lediglich in der Lage sein, dunkle und helle Bildbereiche sowie homogene und stark in der Helligkeit variierende Bereiche zu identifizieren und die Bereichsgrenzen zu bestimmen. Das vorliegende Verfahren lässt sich damit bei der Bearbeitung des Werkstücks vollkommen automatisiert durchführen.

Die für die Bearbeitung eines Werkstücks mit einem Bearbeitungsstrahl ausgebildete Vorrichtung umfasst einen Bearbeitungskopf, der zumindest Einkoppel-öffnungen für den Bearbeitungsstrahl und den Beleuchtungsstrahl, eine Strahlformungsoptik und einen Umlenkspiegel für den Bearbeitungsstrahl, eine Beleuchtungsoptik sowie einen ortsauflösenden optischen Detektor aufweist. Die Strahlformungsoptik und der Umlenkspiegel sind derart angeordnet, dass sie den Bearbeitungsstrahl entlang einer Strahlachse durch eine Austrittsöffnung auf eine vor dem Bearbeitungskopf liegende Bearbeitungsebene richtet. Die Beleuchtungsoptik ist derart im Bearbeitungskopf angeordnet, dass sie den über die zugehörige Einkoppelöffnung eingekoppelten Beleuchtungsstrahl zumindest annähernd koaxial zur Strahlachse des Bearbeitungsstrahls durch den entsprechend ausgebildeten Umlenkspiegel hindurch auf die Bearbeitungsebene richtet. Der optische Detektor ist zur ortsaufgelösten Erfassung der von der Bearbeitungsebene parallel oder unter einem kleinen Winkel zur Strahlachse rückreflektierten optischen Strahlung ausgebildet und entsprechend am Bearbeitungskopf befestigt. Der optische Detektor ist mit einer Auswerteeinrichtung verbunden, die mit einem Bildverarbeitungsalgorithmus eine Auswertung des erfassten Reflexionsmusters zur Bestimmung des Verlaufs der ein oder mehreren Phasengrenzen anhand eines Übergangs von einem Bereich mit einem großflächigen homogenen Gebiet in einen Bereich mit vielen kleinflächigen homogenen Gebieten im optischen Reflexionsmuster automatisiert durchführt.

Ein besonderer Vorteil des vorliegenden Verfahrens sowie der zugehörigen Vorrichtung besteht darin, dass durch die zumindest annähernde koaxiale Beleuchtung und Beobachtung der Bearbeitungszone keinerlei Abschattung oder Verzerrung der Bearbeitungszone im Reflexionsmuster auftritt. Die Phasengrenze zwischen Schmelze und festem Werkstoff kann somit zu jedem Zeitpunkt der Bearbeitung zuverlässig erfasst werden. Die automatische Bildverarbeitung ermöglicht eine Überwachung des Bearbeitungsprozesses in Echtzeit, die auch zur Steuerung oder Regelung dieses Prozesses eingesetzt werden kann.

Als Beleuchtungsquellen können beliebige Lichtquellen eingesetzt werden, deren Intensität ausreichend hoch gegenüber der Intensität der Sekundärstrahlung ist oder die sich in für den Nachweis ausreichendem Maße durch einen optischen Filter von dieser Sekundärstrahlung trennen lassen. Vorzugsweise wird als Beleuchtungsquelle ein Laser, vorzugsweise in Form einer Laserdiode eingesetzt.

### Kurze Beschreibung der Zeichnungen

Das vorliegende Verfahren sowie die zugehörige Vorrichtung werden nachfolgend anhand von Ausführungsbeispielen in Verbindung mit den Zeichnungen ohne Beschränkung des durch die Patentansprüche vorgegebenen Schutzbereichs nochmals näher erläutert. Hierbei zeigen:
- Fig. 1: schematisch die Verhältnisse bei der Laser- bearbeitung eines Werkstücks mit gleich- zeitiger koaxialer Beleuchtung der Bear- beitungszone;
- Fig. 2: zwei Aufnahmen der Bearbeitungszone gemäß dem vorliegenden Verfahren, die ein Reflexions- muster zeigen;
- Fig. 3: ein erstes Beispiel für einen Bearbeitungskopf gemäß der vorliegenden Erfindung;
- Fig. 4: ein zweites Beispiel für einen Bearbeitungs- kopf gemäß der vorliegenden Erfindung; und
- Fig. 5: zwei weitere gemäß dem vorliegenden Verfahren erhaltene Aufnahmen, die ein Reflexionsmuster der Bearbeitungszone zeigen.

### Wege zur Ausführung der Erfindung

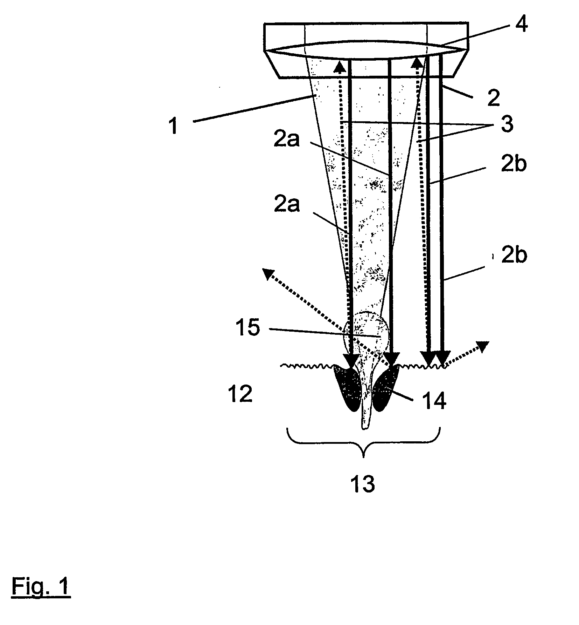

Fig. 1 zeigt schematisch die Verhältnisse bei der Durchführung des vorliegenden Verfahrens zur Bearbeitung eines Werkstücks 12 mit einem Bearbeitungsstrahl, im vorliegenden Fall einem Laserstrahl 1. Der Laserstrahl 1 wird über die Fokussieroptik 4, von der in der Figur lediglich ein Teil zu erkennen ist, auf die Oberfläche des Werkstücks 12 fokussiert. Durch die hohe Intensität des Laserstrahls 1 wird am Auftreffort der Werkstoff lokal in die gasförmige Phase 15 überführt und zum Teil lokal angeschmolzen, wie dies durch die Schmelze 14 in der Figur 1 veranschaulicht ist.

Koaxial zum Laserstrahl 1 wird die Bearbeitungszone 13 beim vorliegenden Verfahren mit optischer Strahlung 2 beleuchtet, wie dies schematisch mit den durchgezogenen Pfeilen angedeutet ist. Diese optische Strahlung 2 wird an der Oberfläche der Bearbeitungszone 13 reflektiert und annähernd parallel zur Einfalls-richtung der optischen Strahlung 2 bzw. zum Laserstrahl 1 rückreflektierte Strahlanteile 3 werden mit einer Kamera ortsaufgelöst erfasst. Diese Kamera ist in der Figur 1 nicht dargestellt. Bei dieser Aufnahme mit der Kamera wird ein Reflexionsmuster der Bearbeitungszone 13 erhalten, das durch den örtlichen Intensitätsverlauf der rückreflektierten Strahlanteile 3 zustande kommt.

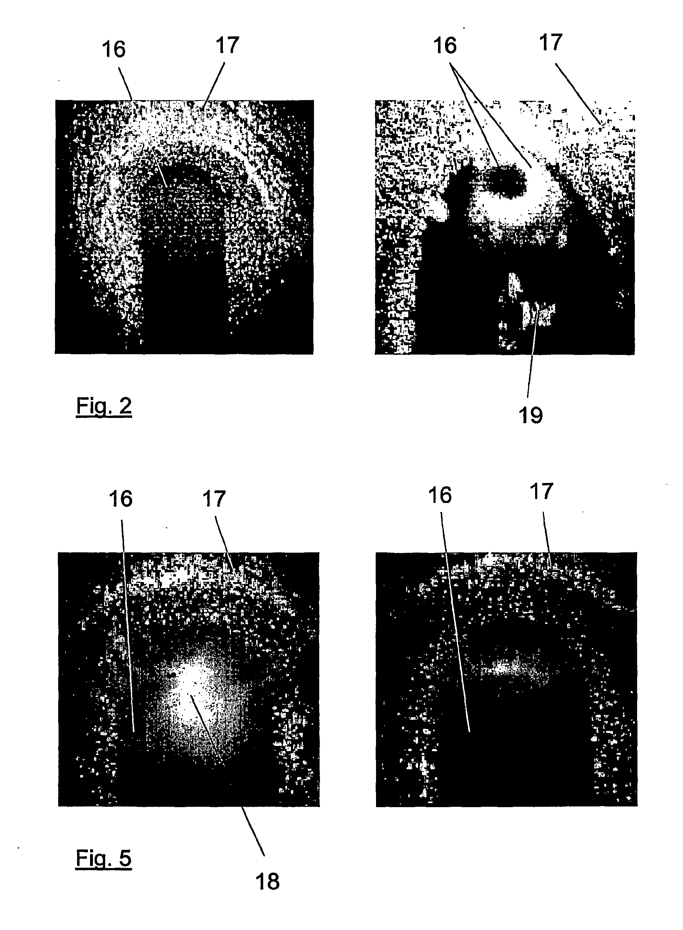

Anteile 2a der optischen Strahlung 2, die auf die Oberfläche der Schmelze 14 treffen, werden in etwa mit gleicher Intensität auf den optischen Detektor rückreflektiert. Dies ergibt einen großflächigen homogenen Bereich im Reflexionsmuster. Anteile 2b der optischen Strahlung 2, die auf den noch festen oder wieder erstarrten Bereich des Werkstückes 12 treffen, werden aufgrund der Oberflächenrauhigkeit stark gestreut und ergeben ein kleinflächiges Reflexionsmuster. Dies ist in den beiden Aufnahmen der koaxial beleuchteten Bearbeitungszone der Figur 2 ersichtlich, die in der linken Abbildung ein Reflexionsmuster beim Schneiden und in der rechten Abbildung ein Reflexionsmuster beim Schweißen mit Nd:YAG-Laserstrahlung zeigt. Die in diesen Figuren erkennbare Grenzlinie zwischen dem großflächigen homogenen Bereich, der den aufgeschmolzenen Bereich 16 repräsentiert, und dem Bereich mit dem kleinflächigen, unregelmäßigen Reflexionsmuster, der den festen Bereich 17 repräsentiert, stellt die Phasengrenze zwischen der flüssigen Phase und der festen Phase dar.

Die Rückreflexion im Bereich der Schmelze hängt auch von der Richtung der lokalen Flächennormalen auf die Oberfläche der Schmelze ab. Bereiche der Schmelze, deren Flächennormalen in einstellbaren Grenzen parallel zur Laserstrahlpropagation liegt, reflektieren die optische Strahlung in die Kamera, während Bereiche mit zur Laserstrahlpropagation geneigter Flächennormalen nicht in die Kamera rückreflektieren. Diese Bereiche sind in der Kameraaufnahme somit dunkel. Dies ist ebenfalls in der Figur 2 erkennbar. Aus der Grenzlinie zwischen hellen und dunklen großflächigen homogenen Bereichen lässt sich somit eine Information über die Form der Oberfläche der Schmelze gewinnen.

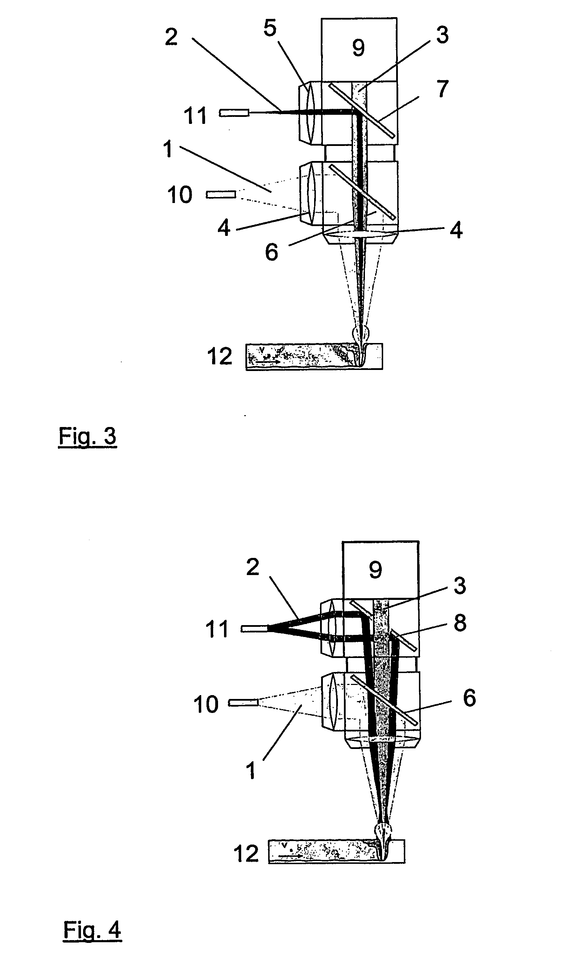

Figur 3 zeigt ein Beispiel für eine Ausgestaltung der vorliegenden Vorrichtung zur Durchführung des Verfahrens. Die Figur zeigt den Bearbeitungskopf mit der Strahlformungs- bzw. Fokussieroptik 4 und dem dichroitischen Umlenkspiegel 6, mit denen der über eine Faser 10 eingekoppelte Laserstrahl 1 auf die Oberfläche des Werkstücks 12 gerichtet wird. Bei der Bearbeitung wird das Werkstück 12 mit der Geschwindigkeit vₛ unter dem Laserstrahl 1 hindurchbewegt, um das gewünschte Bearbeitungsergebnis zu erzielen. Die vorliegende Vorrichtung weist weiterhin eine Einkoppelöffnung für den Beleuchtungsstrahl 2 auf, im vorliegenden Fall ein Laserstrahl einer Laserdiode. Der Beleuchtungsstrahl 2 wird über eine Strahlteilerplatte 7 durch den dichroitischen Umlenkspiegel 6 hindurch zur Beleuchtung der Bearbeitungszone 13 des Werkstücks eingesetzt. Es versteht sich von selbst, dass die Wellenlänge des Beleuchtungsstrahls 2 geeignet gewählt sein muss, damit die Beleuchtung durch den dichroitischen Spiegel 6 hindurch erfolgen kann. Die Strahlformung erfolgt über eine Optik 5 in Verbindung mit dem für die Laserstrahlformung eingesetzten werkstückseitigen Teil der Fokussieroptik 4.

Die von der Werkstückoberfläche rückreflektierten optischen Strahlanteile 3 nehmen den gleichen Weg zurück durch die Strahlteilerplatte 7 hindurch auf eine CMOS-Kamera 9, die ein ortsaufgelöstes Bild der von der Bearbeitungszone 13 rückreflektierten Strahlung aufzeichnet. Die CMOS-Kamera 9 ist in diesem Beispiel, wie auch im nächsten Beispiel der Figur 4, mit einer nicht dargestellten Auswerteeinrichtung verbunden, die die Reflexionsmuster der Aufnahmen zur Bestimmung der gewünschten Phasengrenzen auswertet.

Figur 4 zeigt ein weiteres Beispiel für eine Ausgestaltung der vorliegenden Vorrichtung, bei der abweichend von der Ausgestaltung der Figur 3 der Beleuchtungsstrahl 2 ringförmig aufgespalten wird und auf einen Scraper-Spiegel 8 trifft, über den er in gleicher Weise wie bei Figur 3 auf die Bearbeitungszone 13 des Werkstücks 12 gerichtet wird. Die von der Bearbeitungszone 13 rückreflektierten Strahlanteile 3 können durch die Öffnung im Scraper-Spiegel 8 direkt auf die CMOS-Kamera 9 treffen. Diese Kamera ist senkrecht zur Strahlachse des Bearbeitungs-Laserstrahls 1 ausgerichtet, kann jedoch auch unter einem geringen Winkel zu dieser Achse geneigt sein.

Als Erweiterung des Verfahrens kann zusätzlich zur Erfassung und Auswertung des Reflexionsmusters der in dieser Figur nicht dargestellte optische Filter vor der CMOS-Kamera 9 so gewählt werden, dass das Prozesseigenleuchten an der Phasengrenze flüssig/gasförmig ebenfalls von der Kamera detektiert wird. Damit kann aus der dem Reflexionsmuster überlagerten Intensitätsverteilung auch diese Phasengrenze automatisch bestimmt werden. Figur 5 zeigt hierzu zwei Beispiele für Aufnahmen der koaxial beleuchteten Bearbeitungszone 13 beim Schneiden mit Nd:YAG-Laserstrahlung bei Beobachtung mit einem im Verhältnis zu Figur 2 breitbandigen optischen Filter. In diesen Aufnahmen ist der dem Reflexionsmuster überlagerte Anteil der Prozesseigenstrahlung im Zentrum ersichtlich, der im linken Teil mit dem hellen Bereich die gasförmige Phase 18 zeigt.

### Bezugszeichenliste

- 1: Bearbeitungs-Laserstrahl
- 2: Optische Strahlung / Beleuchtungsstrahl
- 2a: Strahlanteil, der auf Schmelze trifft
- 2b: Strahlanteil, der auf feste Phase trifft
- 3: rückreflektierte Strahlanteile
- 4: Fokussieroptik
- 5: Beleuchtungsoptik
- 6: dichroitischer Spiegel
- 7: Strahlteilerplatte
- 8: Scraper-Spiegel
- 9: CMOS-Kamera
- 10: Faser für Bearbeitungsstrahl
- 11: Faser für Beleuchtungsstrahl
- 12: Werkstück
- 13: Bearbeitungszone
- 14: Schmelze
- 15: gasförmige Phase
- 16: aufgeschmolzener Bereich
- 17: fester Bereich
- 18: gasförmig Phase
- 19: Bereich mit Flächennormale annähernd parallel zum Bearbeitungsstrahl

## Patentansprüche

1. Verfahren zur Vermessung von Phasengrenzen eines Werkstoffes bei der Bearbeitung eines Werkstücks (12) mit einem Bearbeitungsstrahl, insbesondere mit einem Laserstrahl, bei dem
- während der Bearbeitung eine einen Aüftreffort des Bearbeitungsstrahls (1) auf dem Werkstück (12) umfassende Bearbeitungszone (13) zusätzlich zumindest annähernd koaxial zum Bearbeitungsstrahl (1) mit optischer Strahlung (2) beleuchtet wird,
- von der Bearbeitungszone (13) reflektierte Strahlung (3) parallel oder unter einem kleinen Winkel zu einer Einfallsrichtung der optischen Strahlung (2) mit einem optischen Detektor (9) ortsaufgelöst erfasst wird, um ein optisches Reflexionsmuster der Bearbeitungszone (13) zu erhalten, und wobei
mit einem Bildverarbeitungsalgorithmus automatisiert ein Verlauf ein oder mehrerer Phasengrenzen flüssig/fest in der Bearbeitungszone (13) anhand eines Übergangs von einem Bereich mit einem großflächigen homogenen Gebiet in einen Bereich mit vielen kleinflächigen homogenen Gebieten im optischen Reflexionsmuster bestimmt wird.

2. Verfahren nach Anspruch 1,
**dadurch gekennzeichnet,**
**dass** aus dem optischen Reflexionsmuster ein oder mehrere Bereiche (19) einer Schmelze (14) des Werkstoffes bestimmt werden, in denen eine Flächennormale einer Oberfläche der Schmelze (14) innerhalb vorgebbarer Grenzen annähernd parallel zum Bearbeitungsstrahl (1) liegt.

3. Verfahren nach einem der Ansprüche 1 bis 2,
**dadurch gekennzeichnet,**
**dass** die optische Strahlung (2) zur Beleuchtung der Bearbeitungszone (13) so gewählt wird, dass durch die Bearbeitung erzeugte Sekundärstrahlung gegenüber der reflektierten Strahlung (3) mit einem optischen Filter zumindest teilweise unterdrückt werden kann, der vor dem optischen Detektor (9) angeordnet wird.

4. Verfahren Anspruch 3,
**dadurch gekennzeichnet,**
**dass** eine Intensität der optischen Strahlung (2) zur Beleuchtung der Bearbeitungszone (13) sowie der optische Filter so gewählt werden, dass die Sekundärstrahlung mit dem optischen Detektor (9) weiterhin erfassbar ist, und dass die erfasste Sekundärstrahlung zur Bestimmung einer Phasengrenze flüssig/gasförmig ausgewertet wird.

5. Verfahren nach einem der Ansprüche 1 bis 4,
**dadurch gekennzeichnet,**
**dass** eine Intensität der optischen Strahlung (2) zur Beleuchtung der Bearbeitungszone (13) so gewählt wird, dass durch die Bearbeitung erzeugte Sekundärstrahlung durch die reflektierte Strahlung (3) am optischen Detektor (9) überstrahlt wird.

6. Verfahren nach einem der Ansprüche 2 bis 5,
**dadurch gekennzeichnet,**
**dass** die Bestimmung der Bereiche (19) einer Schmelze (14) des Werkstoffes, in denen eine Flächennormale einer Oberfläche der Schmelze (14) innerhalb vorgebbarer Grenzen annähernd parallel zum Bearbeitungsstrahl (1) liegt, automatisiert mit einem Bildverarbeitungsalgorithmus erfolgt.

7. Verfahren nach einem der Ansprüche 1 bis 6,
**dadurch gekennzeichnet,**
**dass** die Beleuchtung und die Erfassung der reflektierten Strahlung (3) durch einen dichroitischen Spiegel (6) hindurch erfolgen, über den der Bearbeitungsstrahl (1) auf das Werkstück (12) gerichtet wird.

8. Verfahren nach einem der Ansprüche 1 bis 6,
**dadurch gekennzeichnet,**
**dass** die Beleuchtung und die Erfassung der reflektierten optischen Strahlung (3) durch eine Öffnung in einem Umlenk- und/oder Fokussierspiegel (8) hindurch erfolgen, über den der Bearbeitungsstrahl (1) auf das Werkstück (12) gerichtet wird.

9. Vorrichtung für die Bearbeitung eines Werkstücks mit einem Bearbeitungsstrahl, insbesondere einem Laserstrahl, zumindest umfassend einen Bearbeitungskopf, der eine Einkoppelöffnung für den Bearbeitungsstrahl (1), eine weitere Einkoppelöffnung für einen Beleuchtungsstrahl (2), eine Strahlformungsoptik (4) und einen Umlenkspiegel (6, 8), mit denen der Bearbeitungsstrahl (1) entlang einer Strahlachse durch eine Austrittsöffnung auf eine vor dem Bearbeitungskopf liegende Bearbeitungsebene gerichtet wird, eine Beleuchtungsoptik (5), die den Beleuchtungsstrahl (2) zumindest annähernd koaxial zur Strahlachse des Bearbeitungsstrahls (1) durch den Umlenkspiegel (6, 8) hindurch auf die Bearbeitungsebene richtet, und einen optischen Detektor (9) aufweist, der so angeordnet ist, dass er von der Bearbeitungsebene parallel oder unter einem kleinen Winkel zur Strahlachse reflektierte optische Strahlung (3) ortsaufgelöst erfassen kann, und eine mit dem optischen Detektor (9) verbundene Auswerteeinrichtung, die einen Bildverarbeitungsalgorithmus zur Auswertung eines erfassten Reflexionsmusters für die Bestimmung des Verlaufs ein oder mehrerer Phasengrenzen flüssig/fest anhand eines Übergangs von einem Bereich mit einem großflächigen homogenen Gebiet in einen Bereich mit vielen kleinflächigen homogenen Gebieten im optischen Reflexionsmuster aufweist.

10. Vorrichtung nach Anspruch 9,
**dadurch gekennzeichnet, dass** der Umlenkspiegel (6, 8) ein dichroitischer Spiegel (6) ist.

11. Vorrichtung nach Anspruch 9,
**dadurch gekennzeichnet, dass** der Umlenkspiegel (6, 8) zumindest eine Öffnung aufweist, durch die hindurch der Beleuchtungsstrahl (2) auf die Bearbeitungsebene gerichtet wird.

## Claims

1. A method for measuring phase boundaries of a material during the machining of a workpiece (12) with a machining beam, more preferably with a laser beam, where
- during the machining a machining region (13) comprising an impact location of the machining beam (1) on the workpiece (12) is additionally illuminated at least approximately coaxially to the machining beam (1) with optical radiation (2),
- radiation (3) reflected from the machining region (13) is detected parallel to an incidence direction of the optical radiation (2) or at a small angle thereto with an optical detector (9) with local resolution in order to obtain an optical reflection pattern of the machining region (13),
and wherein with an image processing algorithm a course of one or several phase boundaries liquid/solid in the machining region (13) is determined in an automated manner by means of a transition from an area with a large-surface homogeneous area to an area with many small-surface homogeneous areas in the optical reflection pattern.

2. The method according to claim 1,
**characterized in that** from the optical reflection pattern one or several areas (19) of a melt (14) of the workpiece are determined in which a surface normal of a surface of the melt (14) within predeterminable limits, is situated approximately parallel to the machining beam (1).

3. The method according to one of the claims 1 to 2, **characterized in**
**that** the optical radiation (2) for illumination of the machining region (13) is selected so that secondary radiation created through the machining can be at least partly suppressed relative to the reflected radiation (3) with an optical filter which is arranged in front of the optical detector (9).

4. The method according to claim 3,
**characterized in**
**that** an intensity of the optical radiation (2) for illumination of the machining region (13) and the optical filter are selected so that the secondary radiation can continue to be detected with the optical detector (9) and that the detected secondary radiation is created for determining a phase boundary liquid/gaseous.

5. The method according to any one of the claims 1 to 4,
**characterized in that** an intensity of the optical radiation (2) for illumination of the machining region (13) is selected so that secondary radiation created through the machining is over-radiated by the reflected radiation (3) on the optical detector.

6. The method according to any one of the claims 2 to 5,
**characterized in**
**that** the determination of the areas (19) of a melt (14) of the material in which a surface normal of a surface of the melt (14) within predeterminable limits is situated approximately parallel to the machining beam (1), takes place automated with an image processing algorithm.

7. The method according to any one of the claims 1 to 6,
**characterized in that**
the illumination and the detection of the reflected radiation (3) take place through a dichroic mirror (6) via which the machining beam (1) is directed onto the workpiece (12).

8. The method according to any one of the claims 1 to 6,
**characterized in**
**that** the illumination and the detection of the reflected optical radiation (3) take place through an aperture in a deflection and/or focussing mirror (8) via which the machining beam (1) is directed onto the workpiece (12).

9. A device for the machining of a workpiece with a machining beam, more preferably a laser beam, at least comprising a machining head having a launching aperture for the machining beam (1) a further launching aperture for an illumination beam (2), beam forming optics (4) and a deflection mirror (6,8) by means of which the machining beam (1) is directed along a beam axis through an exit aperture onto a machining plane located in front of the machining head, illumination optics (5) which directs the illumination beam (2) at least approximately coaxially to the beam axis of the machining beam (1) through the deflection mirror (6,8) onto the machining plane, and an optical detector (9) which is arranged so that it can detect with local resolution optical radiation (3) reflected from the machining plane parallel to the beam axis or at a small angle thereto, and an evaluation device connected with the optical detector (9) having an image processing algorithm for evaluating a detected reflection pattern for determining the course of one or several phase boundaries liquid/solid by means of a transition from an area with a large-surface homogeneous area to an area with many small-surface homogeneous areas in the optical reflection pattern.

10. The device according to claim 9,
**characterized in that** the deflection mirror (6, 8) is a dichroic mirror (6).

11. The device according to claim 9,
**characterized in that** the deflection mirror (6,8) has at least one aperture through which the illumination beam (2) is directed onto the machining plane.

## Revendications

1. Procédé pour mesurer des limites de phases d'un matériau lors de l'usinage d'une pièce (12) avec un faisceau d'usinage, en particulier avec un faisceau laser, dans lequel
- une zone d'usinage (13) comprenant un point d'impact du faisceau d'usinage (1) sur la pièce (12) est éclairée pendant l'usinage avec du rayonnement (2) optique en supplément au moins approximativement de façon coaxiale par rapport au faisceau d'usinage (1),
- du rayonnement (3) réfléchi par la zone d'usinage (13) est détecté avec résolution locale parallèlement ou sous un petit angle par rapport à une direction d'incidence du rayonnement optique (2) avec un détecteur (9) optique, afin d'obtenir un modèle de réflexion optique de la zone d'usinage (13), et
une courbe d'une ou deux plusieurs limites de phases liquide/solide étant déterminée de façon automatisée avec un algorithme de traitement d'image dans la zone d'usinage (13) à l'aide d'un passage d'un secteur avec une zone homogène de grande surface à un secteur avec de nombreuses zones homogènes de petite surface dans le modèle de réflexion optique.

2. Procédé selon la revendication 1,
**caractérisé en ce que**,
à partir du modèle de réflexion optique, un ou plusieurs secteurs (19) d'une masse fondue (14) du matériau sont déterminés, dans lesquels une perpendiculaire à une surface de la masse fondue (14) se situe à l'intérieur de limites prédéfinissables approximativement parallèlement au faisceau d'usinage (1).

3. Procédé selon l'une quelconque des revendications 1 à 2,
**caractérisé en ce que**
le rayonnement (2) optique est choisi pour l'éclairage de la zone d'usinage (13) de telle sorte que du rayonnement secondaire généré par l'usinage peut être supprimé au moins partiellement par rapport au rayonnement (3) réfléchi avec un filtre optique qui est disposé devant le détecteur (9) optique.

4. Procédé selon la revendication 3,
**caractérisé en ce**
**qu'**une intensité du rayonnement (2) optique pour l'éclairage de la zone d'usinage (13) et le filtre optique sont choisis de telle sorte que le rayonnement secondaire peut être enregistré également avec le détecteur (9) optique et en ce que le rayonnement secondaire enregistré est analysé pour déterminer une limite de phase liquide/gazeuse.

5. Procédé selon l'une quelconque des revendications 1 à 4,
**caractérisé en ce**
**qu'**une intensité du rayonnement (2) optique pour l'éclairage de la zone d'usinage (13) est choisie de telle sorte que du rayonnement secondaire généré par l'usinage est irradié par le rayonnement (3) réfléchi sur le détecteur (9) optique.

6. Procédé selon l'une quelconque des revendications 2 à 5,
**caractérisé en ce que**
la détermination des secteurs (19) d'une masse fondue (14) du matériau, dans lesquels une perpendiculaire à une surface de la masse fondue (14) se situe à l'intérieur de limites prédéfinissables de façon approximativement parallèle au faisceau d'usinage (1), s'effectue de façon automatisée avec un algorithme de traitement d'image.

7. Procédé selon l'une quelconque des revendications 1 à 6,
**caractérisé en ce que**
l'éclairage et l'enregistrement du rayonnement (3) réfléchi s'effectuent par un miroir (6) dichrotoïque, par lequel le faisceau d'usinage (1) est orienté sur la pièce (12).

8. Procédé selon l'une quelconque des revendications 1 à 6,
**caractérisé en ce que**
l'éclairage et l'enregistrement du rayonnement (3) réfléchi s'effectuent à travers une ouverture pratiquée dans un miroir de déviation et/ou de focalisation (8), par lequel le faisceau d'usinage (1) est orienté sur la pièce (12).

9. Dispositif pour l'usinage d'une pièce avec un faisceau d'usinage, en particulier un faisceau laser, comprenant au moins une tête d'usinage, qui présente une ouverture d'injection pour le faisceau d'usinage (1), une autre ouverture d'injection pour un faisceau d'éclairage (2), une optique de conformation de faisceau (4) et un miroir de déviation (6, 8), avec lesquels le faisceau d'usinage (1) est orienté le long d'un axe de faisceau à travers une ouverture de sortie sur un plan d'usinage se situant en amont de la tête d'usinage, une optique d'éclairage (5), qui oriente le faisceau d'éclairage (2) au moins approximativement de façon coaxiale par rapport à l'axe du faisceau d'usinage (1) à travers le miroir de déviation (6, 8) sur le plan d'usinage, et un détecteur (9) optique, qui est disposé de telle sorte qu'il peut enregistrer avec une résolution locale du rayonnement (3) optique réfléchi par le plan d'usinage parallèlement ou sous un faible angle par rapport à l'axe du faisceau, et un dispositif d'analyse relié au détecteur (9) optique, qui présente un algorithme de traitement d'image pour l'analyse d'un modèle de réflexion enregistré pour la détermination de la courbe d'une ou plusieurs limites de phases liquide/solide à l'aide d'un passage d'un secteur avec une zone homogène de grande surface à un secteur avec de nombreuses zones homogènes de petite surface dans le modèle de réflexion optique.

10. Dispositif selon la revendication 9,
**caractérisé en ce que** le faisceau de déviation (6, 8) est un miroir (6) dichroïque.

11. Dispositif selon la revendication 9,
**caractérisé en ce que** le miroir de déviation (6, 8) présente au moins une ouverture à travers laquelle le faisceau d'éclairage (2) est orienté sur le plan d'usinage.
